**Europäisches Patentamt**

**European Patent Office**

**Office européen des brevets**

(19)

(11) Veröffentlichungsnummer : **0 485 848 B1**

(12)

# EUROPÄISCHE PATENTSCHRIFT

(45) Veröffentlichungstag der Patentschrift :
**19.07.95 Patentblatt 95/29**

(51) Int. Cl.⁶ : **G01M 11/00**

(21) Anmeldenummer : **91118783.9**

(22) Anmeldetag : **04.11.91**

(54) **Verfahren zum Ein- und Auskoppeln von Licht aus einem Lichtwellenleiter zu Messzwecken.**

(30) Priorität : **13.11.90 DE 4036105**

(43) Veröffentlichungstag der Anmeldung :
**20.05.92 Patentblatt 92/21**

(45) Bekanntmachung des Hinweises auf die
Patenterteilung :
**19.07.95 Patentblatt 95/29**

(84) Benannte Vertragsstaaten :
**AT BE CH DE FR GB IT LI NL SE**

(56) Entgegenhaltungen :
**CA-A- 1 213 057**
**DE-A- 3 828 604**

(73) Patentinhaber : **SIEMENS**
**AKTIENGESELLSCHAFT**
**Wittelsbacherplatz 2**
**D-80333 München (DE)**

(72) Erfinder : **Lieber, Winfried, Dr. Dipl.-Ing.**
**Alpenstrasse 21**
**W-8033 Krailling (DE)**
Erfinder : **Rügenberg, Gervin, Dipl.-Ing.**
**Krüner Strasse 100 B**
**W-8000 München 70 (DE)**

## Beschreibung

Die Erfindung betrifft ein Verfahren zum Ein- und Auskoppeln von Licht in oder aus einem mit einer nachgiebigen Beschichtung versehenen Lichtwellenleiter mittels mindestens eines Biegekopplers, durch den zur Erzeugung der gekrümmten Kontur ein Druck auf die Beschichtung des Lichtwellenleiters ausgeübt wird, wobei das ausgekoppelte Licht in einem Meßgerät ausgewertet wird.

Meßverfahren, bei denen Biegekoppler verwendet werden, sind z.B. in der DE-OS 38 28 604 und in der US-PS 4 652 123 beschrieben. Wie dort im einzelnen dargelegt wird, lassen sich besonders exakte Ergebnisse dann erzielen, wenn mit zwei Sendern und zwei Empfängern gearbeitet wird und aufeinanderfolgend mehrere Messungen ausgehend von beiden Seiten des Meßobjektes durchgeführt werden.

Diesen und allen ähnlichen Meßverfahren liegt das Meßprinzip zugrunde, daß die Ankopplung des/der Empfänger und des/der Sender mittels mindestens eines sogenannten Biegekopplers erfolgt, bei dem der Lichtwellenleiter im Meßbereich eine Verformung erfährt. Beim Empfänger wird das im Verformungsbereich austretende Licht erfaßt und in der Meßeinrichtung zur Auswertung bereitgestellt. Das Licht wird von einem fest angeordneten Lichtempfänger, z.B. einem Fotodetektor, aufgenommen und zur Auswertung bereitgestellt. Beim Sender befindet sich der verformte Bereich des Lichtwellenleiters im Strahlungsfeld einer Lichtquelle. Die Menge des ein- bzw. ausgekoppelten Lichtes hängt zum einen von der räumlichen Zuordnung des im Koppelbereich gebogen verlaufenden Lichtwellenleiters zu dem Lichtempfänger ab, zum anderen von den Brechzahlverhältnissen und der Geometrie der optischen Grenzflächen im Biegekoppler, sofern keine Brechzahlanpassung (durch Immersion oder elastisches Material) erfolgt. An und für sich ist das Meßgerät sofort nach der mechanischen Betätigung des Biegekopplers, z.B. nach dem Schließen eines Deckels, betriebsbereit und es könnte sogleich mit den Messungen begonnen werden.

Es hat sich aber gezeigt, daß um so ungenauere Werte erhalten werden, je früher nach dem Biegen des Lichtwellenleiters in die Koppelposition gemessen wird. Untersuchungen haben zu dem Ergebnis geführt, daß sich offenbar eine zeitliche Veränderung des Ein- bzw. Auskoppelwirkungsgrades ergibt, und zwar dadurch, daß es bei der Beschichtung der Lichtwellenleiter unter dem Druck des die mechanische Biegung des Lichtwellenleiters bewirkenden Elementes (z.B. eines Dornes, eines Biegebalkens oder dergleichen) zu einer Verformung, z.B. einem Fließen der Beschichtung (Coating) des Lichtwellenleiters kommt und daß diese, wenn auch geringfügige, mechanische Veränderung zum einen die Lage des verformten Bereichs zur Lichtquelle bzw. zum Lichtempfänger verändert, zum anderen die Geometrie der optischen Grenzfläche beeinflußt. Man könnte derartige Fehlereinflüsse zwar dadurch beseitigen, daß so lange gewartet wird, bis die Verformung der Beschichtung aufgehört hat, weil dann der Endzustand des Strahlungsfeldes in Richtung auf den Fotodetektor erreicht ist und eine zeitliche Änderung der Meßsignale bei konstantem Sendesignal nicht mehr festgestellt werden kann.

Der Erfindung liegt die Aufgabe zugrunde, ein Verfahren der eingangs genannten Art so weiterzubilden, daß ohne unnötige Totzeit und trotzdem zuverlässig das gewünschte Meßergebnis erhalten werden kann. Gemäß der Erfindung wird diese Aufgabe dadurch gelöst, daß noch während der infolge des ausgeübten Druckes erfolgenden Verformung der Beschichtung die Stärke des ausgekoppelten Lichtes gemessen wird, daß diese Messung vor Erreichen des Endzustandes der druckabhängigen Verformung beendet wird und daß der im Endzustand erreichbare End-Meßwert durch Extrapolation aus den während der Verformung gewonnenen Meßwerten festgestellt wird.

Auf diese Weise ist es nicht erforderlich, daß so lange abgewartet wird, bis die Beschichtung des Lichtwellenleiters auf ihren Endzustand zusammengedrückt ist, d.h. einschließlich des Fließens, sondern es kann sofort nach dem Biegen des Lichtwellenleiters in die Koppelposition mit dem Meßvorgang begonnen werden. Auch sind durch die aus den gewonnenen Meßwerten erfolgende Extrapolation jeweils diejenigen Unterschiede mit berücksichtigt, die sich z.B. bei Messung an Lichtwellenleitern mit unterschiedlichen Beschichtungsmaterialien ergeben. Nach dem erfindungsgemäßen Verfahren kann somit schnell und zuverlässig gemessen werden und das Meßergebnis selbst steht mit hoher Genauigkeit zur Verfügung. Deshalb ist die Erfindung mit besonderem Vorteil dort einsetzbar, wo sich von Haus aus hohe Meßgenauigkeiten erzielen lassen, wie z.B. bei dem in der DE-OS 38 28 604 beschriebenem Meßverfahren.

Weiterbildungen der Erfindung sind in abhängigen Ansprüchen wiedergegeben.

Die Erfindung und ihre Weiterbildungen werden nachfolgend anhand von Zeichnungen näher erläutert. Es zeigen:

Fig. 1      in schematischer Darstellung den Aufbau eines Meßgerätes zur Durchführung des erfindungsgemäßen Verfahrens,

Fig. 2      im Querschnitt einen Lichtwellenleiter im Koppelbereich vor der Verformung,

Fig. 3      einen Lichtwellenleiter im Koppelbereich nach Abschluß der Verformung,

Fig. 4      die ausgekoppelte Leistung in Abhängigkeit von der Zeit und

Fig. 5    die Lage der Meßpunkte für ein Ausführungsbeispiel des erfindungsgemäßen Verfahrens.

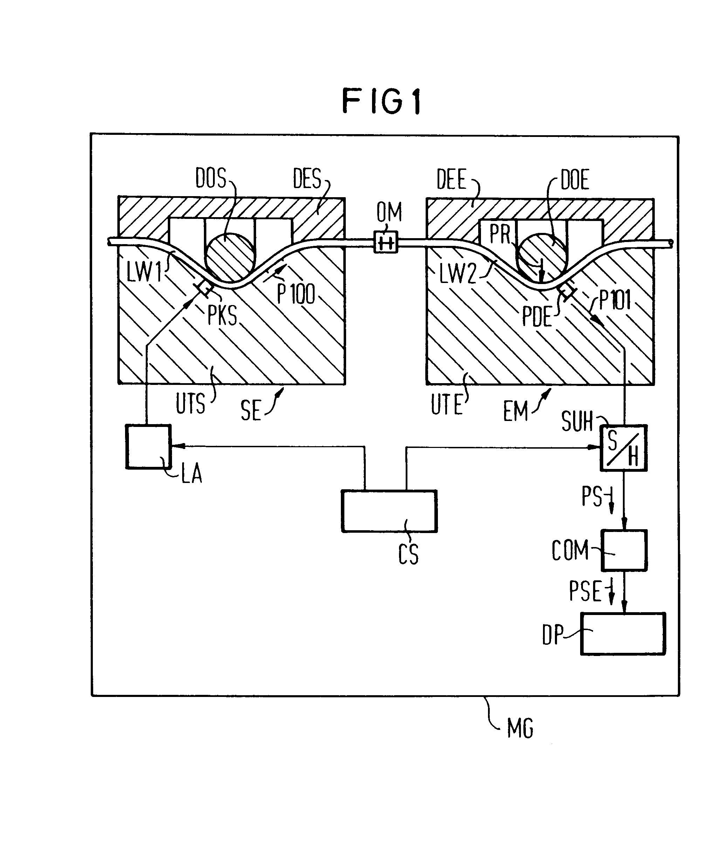

In Fig. 1 ist ein Meßgerät MG dargestellt, das zwei hier im Schnitt gezeichnete Biegekoppler enthält, welche auf zwei Lichtwellenleiter LW1 und LW2 wirken. Diese beiden Lichtwellenleiter LW1 und LW2 schließen zwischen sich ein optisches Medium OM ein (z.B. einen Spleiß, eine Übertragungsstrecke, einen Koppler oder dergleichen), dessen Dämpfung bestimmt werden soll. Im vorliegenden Beispiel ist angenommen, daß das Sendesignal ebenfalls über einen Biegekoppler eingekoppelt wird; es ist aber auch möglich, das Sendesignal z.B. endseitig in die Stirnfläche des Lichtwellenleiters LW1 einzukoppeln. Der sendeseitige Biegekoppler SE weist ein Unterteil UTS und ein Oberteil in Form eines Deckels DES auf, zwischen denen der Lichtwellenleiter LW1 geführt wird. Dieser beschichtete Lichtwellenleiter LW1 wird durch einen Dorn DOS fest gegen das Unterteil UTS gedrückt und steht dort in Kontakt mit einer sendeseitigen Einkoppeleinrichtung PKS, die in Form eines Biegekopplers arbeitet. Es ist aber auch möglich, die sendeseitige Ankopplung am stirnseitigen Ende des Lichtwellenleiters LW1 durchzuführen. Das in den Lichtwellenleiter LW1 eingekoppelte Licht habe den Pegel P100.

Nach dem Durchlaufen des optischen Mediums OM wird ein Teil des Sendesignals P100 über den Empfänger-Koppler EM ausgekoppelt und zwar ebenfalls mittels eines Biegekopplers in Form eines Dornes DOE, welcher den Lichtwellenleiter LW2 gegen das Unterteil UTE der empfangsseitigen Koppeleinrichtung drückt. Der Dorn DOE ist in dem aufklappbaren Deckel DEE enthalten und wird beim Absenken des Deckels DEE der Lichtwellenleiter LW2 fest gegen das Unterteil UTE gedrückt. Eine ausreichend feste und mit hinreichend großem Druck PR erfolgende Anpressung des Lichtwellenleiters LW2 ist erforderlich, um dessen definierte Lage im Koppelbereich sicherzustellen. Das durch die Biegung aus dem Lichtwellenleiter LW2 austretenden Lichtes soll von einer Empfangseinrichtung, z.B. einer Fotodiode PDE aufgenommen werden, die raumfest im Koppelbereich angeordnet ist und so dimensioniert und ausgerichtet wird, daß sie möglichst viel des austretenden Lichtes aufnimmt. Die Optimierung der lichtempfindlichen Empfangseinrichtung PDE ist somit auf den Endzustand ausgelegt, d.h. in einem Übergangsbereich, in dem die in dem die Verformung der Beschichtung des Lichtwellenleiters noch nicht abgeschlossen ist, wird weniger Licht aufgenommen als im "eingeschwungenen Zustand".

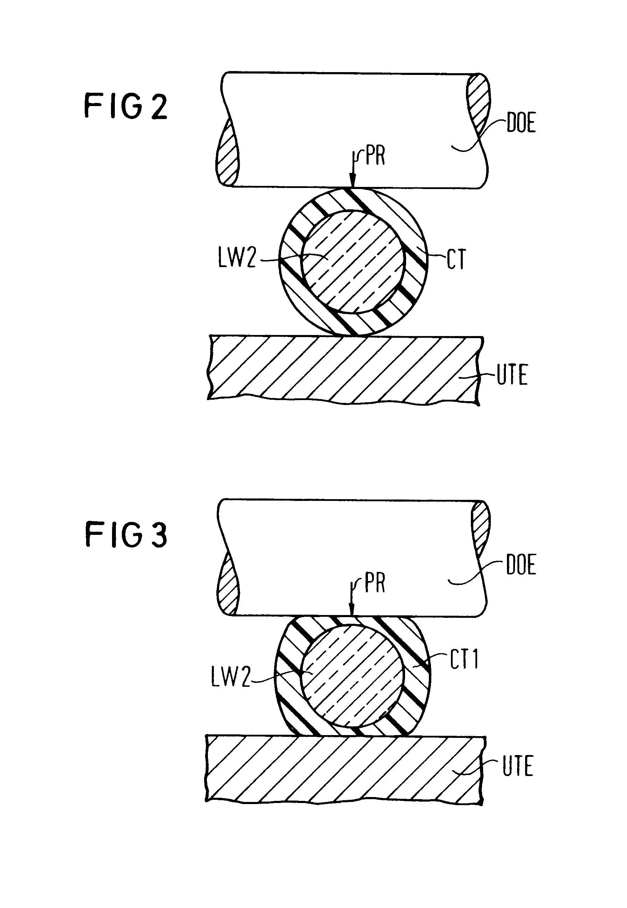

Zur Erläuterung der Verhältnisse wird auf Fig. 2 Bezug genommen, wo der Lichtwellenleiter LW2 in einer gegenüber Fig. 1 um 90° gedrehten Position gezeichnet ist. Er wird dort durch den Dorn DOE gegen das Unterteil UTE gedrückt, wobei der Dorn DOE gerade die Oberfläche der Beschichtung (Coating) CT berührt. Da ein ausreichend großer Druck ausgeübt werden muß (angedeutet durch den Pfeil PR), kommt es unter einer etwas länger dauernden Einwirkung des Dornes DOE zu einem Fließen bzw. einer Verformung der Beschichtung CT, die im Endzustand die in Fig. 3 dargestellte Verteilung annimmt. Dort ist oben und unten ein Teil des Coating-Materials abgewandert und in den freien Bereich (Spaltbereich zwischen Dorn DOE und Unterteil UTE) hineingedrückt worden. Insgesamt ergibt sich also die mit CT1 bezeichnete ungleichmäßige Verteilung des Beschichtungsmaterials. Obwohl zur Erläuterung hier nur auf die Ankopplung beim Empfänger Bezug genommen wird, gelten die gleichen Überlegungen natürlich auch für die Ankopplung auf der Sendeseite (Dorn DOS, Lichtwellenleiter LW1 und Verformung von dessen Coating).

Exakte Messungen im Endzustand könnten also erst durchgeführt werden, wenn die Beschichtung den mit CT1 bezeichneten Endzustand erreicht hat, was bei derzeit gebräuchlichen Coatings etwa in der Größenordnung von 1 min bis 5 min dauert.

Um zu vermeiden, daß so lange gewartet werden muß und daß eventuell sogar faserspezifische Totzeiten eingehalten werden müssen, wird bei der Erfindung sofort nach dem Schließen der Deckel DEE und/oder der Koppler EM und/oder SE mit dem Messen begonnen, wobei der zeitliche Verlauf des Empfangspegels erfaßt wird, beispielsweise durch die Abtastung einzelner Meßpunkte in kurzen Zeitabständen mittels einer Abtast- und Halteschaltung (sample and hold) SUH. Auf diese Weise werden aus dem Empfangssignal Meßpunkte hergeleitet, die einer Berechnungseinrichtung COM, z.B. einem Mikrocomputer zugeleitet werden. Dieser errechnet aus den angelieferten Meßwerten durch Regression eine nichtlineare Funktion aus der es durch Extrapolation den zu erweiternden Endwert PSE erhält. Aus diesen unter Einbeziehung der Materialcharakteristiken des Fasercoatings gewonnenen extrapolierten Wert PSE, wird der anzuzeigende Wert abgeleitet, welcher auf einer Anzeigeeinrichtung (Display) DP der Bedienungsperson angezeigt wird. Ein gemeinsamer Taktgeber CS steuert den zeitlichen Ablauf auf der Sende- und auf der Empfangsseite.

Für die nichtlineare Extrapolation eignet sich besonders die sogenannte nichtlineare Regression, die nachfolgend anhand eines Beispieles näher erläutert wird.

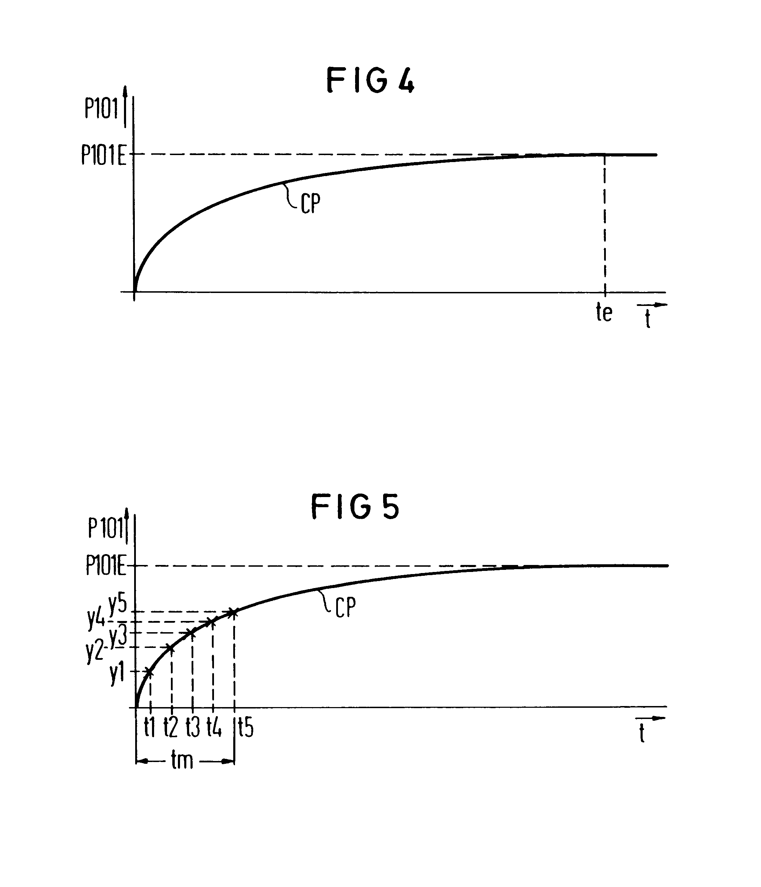

In Fig. 4 ist in Abhängigkeit von der Zeit t der Verlauf des gemessenen Pegels P101 unter Einbeziehung des Fließens oder der Verformung des Lichtwellenleiter-Coatings dargestellt. Der Endwert, (d.h. nach dem Abschluß des Fließens bzw. der Verformung) der Größe P101E wird erst nach einer relativ langen Zeit erreicht, und die dargestellte Kurve entspricht den Verlauf einer e-Funktion. Wollte man genau messen, müßte man somit mindestens abwarten, bis die Zeit te (Totzeit) vergangen ist, d.h. bis sich die Kurve CP weitgehend dem

3

Grenzwert P101E angenähert hat.

Bei der Erfindung wird demgegenüber gänzlich anders gearbeitet, d.h. es wird bereits unmittelbar nach dem Schließen der Koppeleinrichtung EM bzw. SE des Empfängers und/oder des Senders mit dem Meßvorgang begonnen. Die Messung erfolgt also in einem Bereich, in dem der Dorn DOE und/oder DOS nach Fig. 1 seine Endposition noch nicht erreicht hat. Es wird also bereits gemessen bevor der Verformungsvorgang der Beschichtung abgeschlossen ist, der ja erst nach einigen Minuten die in Fig. 3 gezeigte Konfiguration ergibt. Die Meßzeit tm selbst ist relativ kurz, jedenfalls wesentlich kürzer als die Totzeit te nach Fig. 4 und beträgt beispielsweise nur 10 sec. (vgl. Fig. 5).

Die Kurve CP läßt sich als Gleichung folgendermaßen beschreiben:

$$y = a(l - e^{-\frac{t}{b}}) \quad (1)$$

Nimmt man an, daß für die verschiedenen Zeitwerte nach Fig. 5 t1, t2....t5 innerhalb der kurzen Meßzeit tm nacheinander die Pegelwerte y1, y2...y6 erhalten wurden und zwar nach folgender Tabelle:

$$t1 = 1 \quad t2 = 2 \quad t3 = 3 \quad t4 = 4 \quad t5 = 5 \quad sec$$
$$y1 = 1,0 \quad y2 = 1,65 \quad y3 = 2,1 \quad y4 = 2,4 \quad y5 = 2,6 \quad (V)$$

Dann ermöglicht der durch die Meßwerte y1 bis y5 erhaltene oder erfaßte Bereich der Kurve CP eine Bestimmung der Koeffizienten a, b insbesondere durch nichtlineare Regression. Mit einer Regression nach der Methode der kleinsten Fehlerquadrate (der Algorithmus hierfür ist beschrieben in: Dr. Marquardt: "An Algerithen for Least Square Estimation of Nonlinear Pasameters", J. Soc. Indust. and Appl. Math., 11. No. 2, 1963) ergibt sich in diesem Beispiel etwa a = 3.0 und b = 2.5.

Damit lautet die errechnete Funktion der Kurve CP:

$$y = 3(l - e^{-0,4t}) \quad (2)$$

Daraus ergibt sich für die Zeit t→∞ der Endwert ye = 3 als nichtlinear extrapolierter Wert, also entsprechend P101 E in Fig. 3 und Fig. 4.

Anstelle der vorstehend beschriebenen nichtlinearen Regression können die Koeffizienten a, b der Funktion y auch beispielsweise durch lineare Approximation der e-Funktion im Meßintervall bestimmt werden. Dabei muß das Meßintervall relativ kurz gewählt werden, indem beispielsweise nur die Meßwerte y3 bis y5 verwendet werden. Aus diesen Werten erhält man durch lineare Regression zunächst eine Gerade mit der Gleichung

$$y_1 = a_1 + b_1 \cdot t$$

mit

$$a_1 = 1.367$$

und

$$b_1 = 0.25$$

Diese Gerade hat in der Mitte des betrachteten Intervalls (für t = 4) den Funktionswert

$$y_1 = 2.367$$

und die Steigung

$$y'_1 = b_1 = 0.25$$

Nun ist die gesuchte Funktion der Form

$$y = a(l - e^{-\frac{t}{b}})$$

so zu wählen, daß sie für t = 4 denselben Wert und dieselbe Steigung hat wie die Gerade $y_1$. Dies führt auf zwei nichtlineare Gleichungen

$$y = a(l - e^{-\frac{t}{b}}) = y_1$$

und

$$y' = \frac{ae}{b} - \frac{t}{b}) = b_1$$

Nach Lösung des Gleichungssystems und Einsetzen der Werte $y_1$, $b_1$ und t erhält man etwa b = 2.6 und a = 3.03. Die errechnete Funktion für CP lautet

$$y = 3.03 (l - e^{-0.385t})$$

und der extrapolierte Endwert ist ye = 3.03.

Das Approximationsverfahren kommt mit einem geringen Rechenaufwand als die nichtlineare Regression aus, liefert aber ungenauere Resultate.

Insgesamt erhält man also durch die Extrapolation relativ genaue Werte, die den Endzustand (nach Beenden des Fließens - vgl. Fig. 3) weitgehend genau beschreiben, so daß nicht erst abgewartet werden muß, bis der Endzustand tatsächlich erreicht ist (nach der Zeit te) und für die Messung bereits die kurze Zeit tm genügt.

## Patentansprüche

1. Verfahren zum Ein-/oder Auskoppeln von Licht aus einem mit einer nachgiebigen Beschichtung versehenen Lichtwellenleiter (LW2) mittels eines Biegekopplers (DOE, UTE), durch den zur Erzeugung der gekrümmten Kontur ein Druck auf die Beschichtung (CT) des Lichtwellenleiters (LW2) ausgeübt wird, wobei das ausgekoppelte Licht in einem Meßgerät (MG) ausgewertet wird, **dadurch gekennzeichnet,** daß noch während der infolge des ausgeübten Druckes erfolgenden Verformung der Beschichtung (CT) die Stärke des ausgekoppelten Lichtes (P101) gemessen wird, daß diese Messung vor Erreichen des Endzustandes (te) der druckabhängigen Verformung beendet wird und daß der im Endzustand erreichbare End-Meßwert (ye) durch Extrapolation aus den während der Verformung gewonnenen Meßwerten festgestellt wird.

2. Verfahren nach Anspruch 1, **dadurch gekennzeichnet,** daß die Ermittlung des End-Meßwertes (ye) mit Hilfe der nichtlinearen Regression durchgeführt wird.

3. Verfahren nach Anspruch 1, **dadurch gekennzeichnet,** daß die Ermittlung des End-Meßwertes (ye) mit Hilfe der linearen Approximation durchgeführt wird.

## Claims

1. Method for coupling light into or out of an optical waveguide (LW2), provided with a compliant coating, by means of a flexural coupler (DOE, UTE), by which, for generating the curved contour, a pressure is exerted on the coating (CT) of the optical waveguide (LW2), the light coupled out being evaluated in a measuring device (MG), characterized in that, during the deformation of the coating (CT), the said deformation occurring as a result of the pressure exerted, the intensity of the light (P101) coupled out is measured, in that this measurement is completed before reaching the end condition (te) of the pressure-dependent deformation and in that the final measured value (ye) attainable in the end condition is determined by means of extrapolation from the measured values obtained during the deformation.

2. Method according to Claim 1, characterized in that the determination of the final measured value (ye) is carried out with the aid of non-linear regression.

3. Method according to Claim 1, characterized in that the determination of the final measured value (ye) is carried out with the aid of linear approximation.

## Revendications

1. Procédé d'injection et/ou de découplage de la lumière à partir d'un guide d'ondes lumineuses (LW2) muni d'un revêtement souple, à l'aide d'un coupleur à flexion (DOE, UTE), par lequel une pression est appliquée au revêtement (CT) du guide d'ondes lumineuses (LW2), pour l'obtention du contour incurvé, la lumière découplée étant évaluée dans un appareil de mesure (MG), caractérisé par le fait qu'on mesure l'intensité de la lumière découplée (P101) déjà pendant la déformation du revêtement (CT), qui s'effectue sous l'effet de la pression exercée, qu'on arrête cette mesure avant que soit atteint l'état final (te) de la déformation qui dépend de la pression, et qu'on détermine la valeur de mesure finalte (ye), que l'on peut obtenir dans l'état final, par extrapolation à partir des valeurs de mesure obtenues pendant la déformation.

2. Procédé suivant la revendication 1, caractérisé par le fait que la détermination de la valeur de mesure finale (ye) est exécutée à l'aide d'une régression non linéaire.

3. Procédé suivant la revendication 1, caractérisé par le fait que la détermination de la valeur de mesure finale (ye) est exécutée à l'aide de l'approximation linéaire.

# FIG 1

FIG 2

DOE

PR

LW2

CT

UTE

FIG 3

DOE

PR

LW2

CT1

UTE

# FIG 4

# FIG 5